# EUROPÄISCHE PATENTSCHRIFT

(11) **EP 2 069 180 B1**
(45) Veröffentlichungstag und Bekanntmachung des Hinweises auf die Patenterteilung: **25.05.2011**
(21) Anmeldenummer: 07820924.4
(22) Anmeldetag: 04.10.2007
(51) Int. Cl.: B61C 9/38, B60B 37/04, B60K 1/00

(54) **RADSATZWELLE FÜR EINE ACHSREITENDE ELEKTRISCHE ANTRIEBSMASCHINE UND ANTRIEBSEINHEIT**
WHEEL SET SHAFT FOR AN ELECTRIC DRIVE UNIT MOUNTED ON THE AXLE AND DRIVE UNIT
ARBRE D'ESSIEU MONTÉ POUR UNE MACHINE MOTRICE ÉLECTRIQUE CHEVAUCHANT UN ESSIEU ET UNITÉ D'ENTRAÎNEMENT

(30) Priorität: 05.10.2006 DE 102006047186
(43) Veröffentlichungstag der Anmeldung: 17.06.2009
(73) Patentinhaber: SIEMENS AKTIENGESELLSCHAFT, 80333 München (DE)
(72) Erfinder: JÖCKEL, Andreas, 90408 Nürnberg (DE); SIMON, Maximilian, 82140 Olching (DE); TEICHMANN, Martin, A-8045 Graz (AT)
(86) Internationale Anmeldenummer: PCT/EP2007/060547
(87) Internationale Veröffentlichungsnummer: WO 2008/040781

(56) Entgegenhaltungen:
- WO-A-02/26541
- FR-A- 2 281 850
- JP-A- 3 061 160
- JP-A- 11 255 118

## Beschreibung

Die Erfindung betrifft eine Radsatzwelle für eine achsreitende elektrische Antriebsmaschine umfassend zwei axial seitliche Randbereiche und einen zwischen den Randbereichen angeordneten Mittenbereich. Außerdem betrifft die Erfindung eine Antriebseinheit mit einer solchen Radsatzwelle.

Aus dem Fachaufsatz "Permanenterregte Großmaschinen: Potenziale in der Oberklasse" von M. Kaufhold und A. Jöckel, etz, 2002, Heft 20, Seiten 2 bis 7 geht u.a. hervor, dass zukünftig Traktionsantriebe für Schienenfahrzeuge als gefederte und auch als ungefederte, also achsreitende elektrische Antriebsmaschinen in Form permanentmagneterregter Synchronmotoren ausgeführt werden sollen. Ein weiteres Beispel zeigt die JP-A-11 255 118.

Bei derartigen getriebelosen ungefederten Radsatz-Direktantrieben ist der der Läufer des Synchronmotors mittels eines Läufertragrohres direkt auf der Radsatzwelle montiert. Der Läufer reitet auf der Radsatzwelle, die somit zugleich auch die Läuferwelle ist. Das Läufertragrohr wird an zwei Sitzen auf die ansonsten konventionell bemessene Radsatzwelle aufgeschrumpft. Das Läufertragrohr unterliegt dann praktisch den gleichen mechanischen Torsions- und Biegeverformungen wie die Radsatzwelle selbst. Sie wird daher aus einem vergleichbar hochwertigen Material wie die Radsatzwelle hergestellt. Außerdem sollte an den Schrumpfsitzen zwischen dem Läufertragrohr und der Radsatzwelle eine z.B. durch Mikrobewegungen hervorgerufene Bildung von Passungsrost vermieden werden. Diese Maßnahmen sind aufwändig und steigern die Herstellungskosten.

Eine Aufgabe der Erfindung besteht deshalb darin, eine Radsatzwelle der eingangs bezeichneten Art anzugeben, die die vorstehend genannten Nachteile vermeidet und sich einfach und kostengünstig herstellen lässt.

Diese Aufgabe wird gelöst durch die Merkmale des unabhängigen Patentanspruchs 1. Bei der erfindungsgemäßen Radsatzwelle ist jeder Randbereich zumindest teilweise im Wesentlichen als Vollzylinder mit einer ersten Außenumfangsfläche zur Montage eines Rades oder eines Lagers und der Mittenbereich als leerer Hohlzylinder mit einer zweiten Außenumfangsfläche zur direkten Montage eines Läufers der achsreitenden elektrischen Antriebsmaschine ausgebildet.

Erfindungsgemäß wurde erkannt, dass das bislang verwendete zusätzliche Läufertragrohr den Mittenbereich der Radsatzwelle mechanisch sehr stark entlastet. Deshalb hat die erfindungsgemäße Radsatzwelle im Mittenbereich ausschließlich die Hohlzylinderform des Läufertragrohres. Das ansonsten in dessen innerem Hohlraum zusätzlich verlaufende Teil der bislang aus einem Vollmaterial gefertigten Radsatzwelle entfällt. Der Innenraum des Hohlzylinders ist bei der erfindungsgemäßen Radsatzwelle leer, also materialfrei. Dadurch sinken zum einen der Materialbedarf und zum anderen auch das resultierende Gesamtgewicht. Zugleich bleiben die Funktionsfähigkeit und die Sicherheit im gleichen Umfang wie bisher gewährleistet. Die beim Stand der Technik vorgesehene Kombination zweier Bauteile, nämlich einer konventionellen Radsatzwelle aus Vollmaterial und eines Läufertragrohres, wird durch ein einziges Bauteil, nämlich die erfindungsgemäße Radsatzwelle, ersetzt. Die bislang mittels zweier Bauteile realisierten Funktionen werden in ein einziges Bauteil integriert. Die Einsparung eines Bauteils und auch die Materialeinsparung führen zu einem reduzierten Fertigungsaufwand, so dass die Herstellungskosten insgesamt sinken. Die Verwendung nur eines Bauteils erübrigt außerdem Schrumpfsitzverbindungen, so dass sich bei der erfindungsgemäßen Radsatzwelle prinzipiell kein Passungsrost bilden kann.

Darüber hinaus erlaubt die hohle Ausgestaltung des Mittenbereichs auch den Einsatz von Materialien, deren Verwendung für Radsatzwellen bislang nicht vorstellbar gewesen ist. So ist nun auch eine Herstellung aus einem Gusswerkstoff mit entsprechender Festigkeit grundsätzlich möglich.

Vorteilhafte Ausgestaltungen der erfindungsgemäßen Radsatzwelle ergeben sich aus den Merkmalen der von Anspruch 1 abhängigen Ansprüche.

Günstig ist eine Variante, bei der der Mittenbereich einen größeren Außendurchmesser hat als die beiden Randbereiche. Dadurch wird bei gleichem oder sogar geringerem Materialeinsatz eine höhere oder zumindest gleiche Tragfähigkeit erreicht. Außerdem ergibt sich eine Gewichtseinsparung.

Weiterhin kann vorzugsweise ein zweiteiliger Aufbau mit zwei Wellenteilen vorgesehen sein, wobei jedes Wellenteil jeweils einen der Randbereiche und einen Teil des hohlen Mittenbereichs und insbesondere einen zusätzlichen Übergangsbereich zwischen dem Randbereich und dem Teil des hohlen Mittenbereichs umfasst und die Wellenteile an jeweils dem Mittenbereich zugewandten axialen Enden fest miteinander verbunden sind. So resultiert eine vergleichsweise einfache und günstige Herstellung der Radsatzwelle mit dem hohlen Mittenbereich. Die beiden Wellenteile können z.B. geschmiedet oder warmfließgepresst und mittels einer Schweißtechnik wie z.B. MAG-Schweißen, UP-Schweißen oder Reibschweißen, miteinander verbunden werden. Die jeweiligen Kontaktstellen zum anderen Wellenteil können insbesondere entsprechend der gewählten (Schweiß-)Verbindungstechnik ausgestaltet werden.

Günstig ist es außerdem, wenn die beiden Wellenteile gleich aufgebaut sind und eine Verbindungsstelle der Wellenteile in der axialen Mitte des Mittenbereichs liegt. Dann ergibt sich eine vorteilhafte gleiche mechanische Beanspruchung beider Wellenteile. Außerdem sinkt die Bauteilevielfalt, wenn die Radsatzwelle aus zwei gleichen Wellenteilen zusammengefügt wird. Dies wirkt sich ebenfalls günstig auf die Herstellungskosten aus.

Gemäß einer anderen Variante der Erfindung ist ein dreiteiliger Aufbau mit zwei jeweils einen der Randbereiche umfassenden Wellenrandteilen und mit einem den Mittenbereich bildenden Wellenmittenteil vorgesehen, wobei der Wellenmittenteil an seinen beiden axialen Enden mit jeweils einem der Wellenrandteile fest verbunden ist. Dadurch kann jedes Wellenteil entsprechend der spezifisch für den zugehörigen Wellenbereich geltenden Anforderungen, insbesondere entsprechend den mechanischen und - vor allem im Mittenbereich - auch magnetischen Anforderungen, ausgelegt werden. Eine unabhängige Materialwahl für jedes Wellenteil ist möglich. Insbesondere kann für das Wellenmittenteil ein anderes Material gewählt werden als für die Wellenrandteile. So kann das Wellenmittenteil beispielsweise aus einem Material mit magnetischen Verhalten bestehen und somit eine gewisse Anpassung an den in diesem Mittenbereich zu montierenden magnetisch aktiven Läufer aufweisen. Günstig ist insbesondere ein Material mit geringen magnetischen Verlusten. Beispielsweise kommt ein Baustahl St37 oder St52 in Betracht. Dieses Material ist vergleichsweise preiswert und zeigt dennoch das gewünschte magnetische Verhalten.

Die beiden Wellenrandteile können insbesondere wieder geschmiedet oder warmfließgepresst werden. Die Verbindung der Wellenteile kann ebenfalls wieder mittels einer Schweißtechnik wie z.B. MAG-Schweißen, UP-Schweißen oder Reibschweißen, erfolgen, wobei die jeweiligen Kontaktstellen zum anderen Wellenteil entsprechend der gewählten (Schweiß-) Verbindungstechnik ausgestaltet werden können. Eine Verbindung mittels Reibschweißens führt zu einem besonders geringen mechanischen Verzug.

Vorzugsweise besteht das Wellenmittenteil außerdem aus einem vorgefertigten Rohrstück. Dadurch sinkt der Fertigungsaufwand. Es kann insbesondere auf verfügbare Halbzeuge zurückgegriffen werden.

Bei einer weiteren bevorzugten Ausgestaltung ist am Außenumfang mindestens ein radialer Vorsprung vorgesehen, mittels dessen der auf den Mittenbereich zu montierende Läufer insbesondere in seiner axialen Position fixiert werden kann. Der Begriff "Läufer" ist in diesem Zusammenhang weit zu verstehen. Er soll verschiedene Ausführungsformen umfassen. Zum einen kann es sich um ein Blechpaket mit aufgesetzten oder integrierten Permanentmagneten handeln, wobei das Blechpaket direkt auf die Radsatzwelle aufgeschoben ist. Zum anderen gibt es auch eine Variante, bei der die Permanentmagnete direkt am Außenumfang des Mittenbereichs der Radsatzwelle angebracht, beispielsweise angeklebt oder/und aufbandagiert, sind. Auch diese komplett ohne Läuferbleche oder anderweitige Zwischenkonstruktion realisierte Variante ist als "Läufer" zu interpretieren.

Eine weitere Aufgabe der Erfindung besteht darin, eine einfach und kostengünstig herzustellende Antriebseinheit anzugeben, die sich für einen Einsatz als ungefederter Radsatz-Direktantrieb eignet.

Diese Aufgabe wird gelöst durch die Merkmale des Patentanspruchs 11. Die Antriebseinheit hat die erfindungsgemäße Radsatzwelle, und ein Läufer einer achsreitenden elektrischen Antriebsmaschine ist direkt auf die zweite Außenumfangsfläche des hohlen Mittenbereichs der Radsatzwelle montiert. Beispielsweise ist die elektrische Antriebsmaschine als permanentmagneterregter Synchronmotor ausgeführt. Für die erfindungsgemäße Antriebseinheit ergeben sich im Wesentlichen die gleichen Vorteile, die vorstehend bereits im Zusammenhang mit der erfindungsgemäßen Radsatzwelle beschrieben worden sind. Auch hier ist der Begriff "Läufer" wie vorstehend bereits erläutert weit zu verstehen.

Weitere Merkmale, Vorteile und Einzelheiten der Erfindung ergeben sich aus der nachfolgenden Beschreibung von Ausführungsbeispielen anhand der Zeichnung. Es zeigt:
- FIG 1: ein Ausführungsbeispiel einer Antriebseinheit mit ei- nem achsreitenden Elektromotor, der auf einen hohlen Mittenbereich einer Radsatzwelle montiert ist,
- FIG 2: ein zweiteiliges Ausführungsbeispiel der Radsatzwelle gemäß FIG 1 in teilmontiertem Zustand und
- FIG 3: ein dreiteiliges Ausführungsbeispiel der Radsatzwelle gemäß FIG 1 in teilmontiertem Zustand.

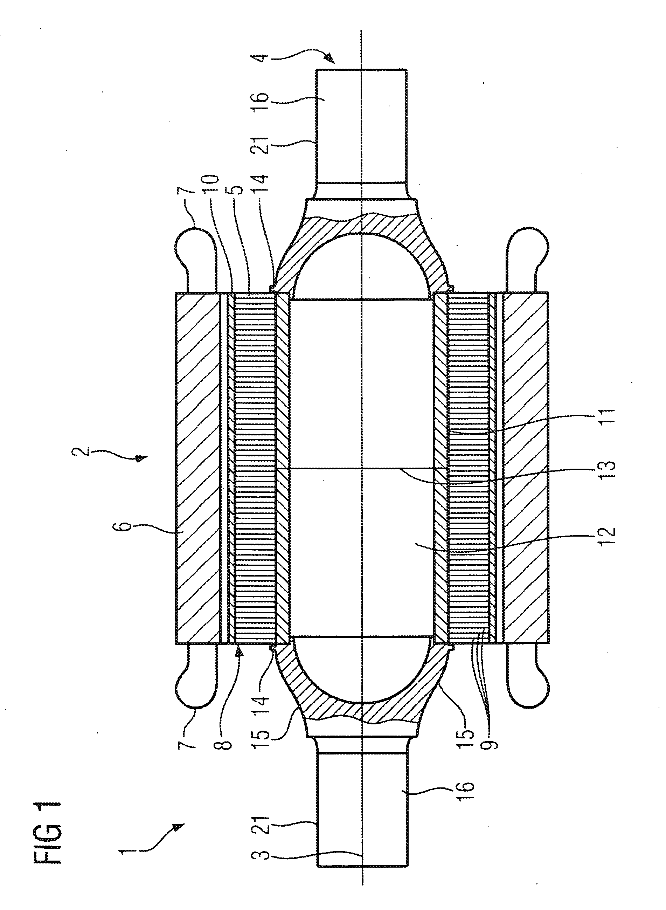

Einander entsprechende Teile sind in FIG 1 bis 3 mit denselben Bezugszeichen versehen.

In FIG 1 ist ein Ausführungsbeispiel einer getriebelosen Antriebseinheit 1 mit einer elektrischen Antriebsmaschine 2 und einer um eine Drehachse 3 drehantreibbaren Radsatzwelle 4 gezeigt. Bei der Antriebsmaschine 2 handelt es sich im Ausführungsbeispiel um einen permanentmagneterregten Synchronmotor, dessen Läufer 5 direkt auf die Radsatzwelle 4 montiert ist. Die Antriebseinheit 1 ist also ein getriebeloser achsreitender ungefederter Radsatz-Direktantrieb. Er ist insbesondere für einen Einsatz in einem in FIG 1 nicht näher gezeigten Schienentriebfahrzeug bestimmt.

Die Antriebsmaschine 2 ist im Wesentlichen wie üblich aufgebaut. Sie umfasst neben dem Läufer 5 einen Ständer 6 mit einem elektrischen Wicklungssystem, von dem in der schematisierten Darstellung gemäß FIG 1 nur die beiden axialen Wicklungsköpfe 7 gezeigt sind. Der Läufer 5 umfasst ein Blechpaket 8 mit axial hintereinander gestapelten gestanzten Blechen 9. An der äußeren Umfangsfläche des Blechpakets 8 sind in Umfangsrichtung gleichmäßig verteilte Permanentmagnete 10 angeordnet, die also direkt an einen Luftspalt zwischen dem Läufer 5 und dem Ständer 6 angrenzen. Grundsätzlich können die Permanentmagnete 10 bei alternativen Ausführungsformen aber auch in das Blechpaket 8 eingebettet oder direkt auf der Radsatzwelle 4 angeordnet sein.

Beim Ausführungsbeispiel gemäß FIG 1 ist das Blechpaket 8 des Läufers 5 direkt auf eine Außenumfangsfläche 11 eines hohlzylindrischen Läuferbereichs 12 der Radsatzwelle 4 montiert. In diesem Mittenbereich ist die Radsatzwelle 4 als Hohlwelle ausgebildet. Der Läuferbereich 12 ist symmetrisch um eine in axialer Richtung, d.h. in Richtung der Drehachse 3 gesehene Mitte 13 der Radsatzwelle 4 angeordnet. Auf beiden axialen Stirnseiten des Blechpakets 8 sind an der Radsatzwelle 4 radial nach außen vorstehende Vorsprünge 14 vorgesehen, um das Blechpaket 8 in seiner axialen Position zu halten.

Der Läuferbereich 12 mündet an beiden axialen Enden in jeweils eine Übergangszone 15, die jeweils in einen Achsstummel 16 übergehen. Jeder der Achsstummel 16 und die jeweils zugehörige Übergangszone 15 bilden einen axialen Randbereich der Radsatzwelle 4. Im Bereich der Achsstummel 16 sind in FIG 1 nicht gezeigte Räder und/oder Lager montiert. Die Achsstummel 16 bestehen im Unterschied zum Läuferbereich 12 aus Vollmaterial. Sie sind im Wesentlichen als Vollzylinder ausgeführt. Geringfügige Abweichungen von der Zylinderform können sich durch am Außenumfang vorgesehene Nuten ergeben.

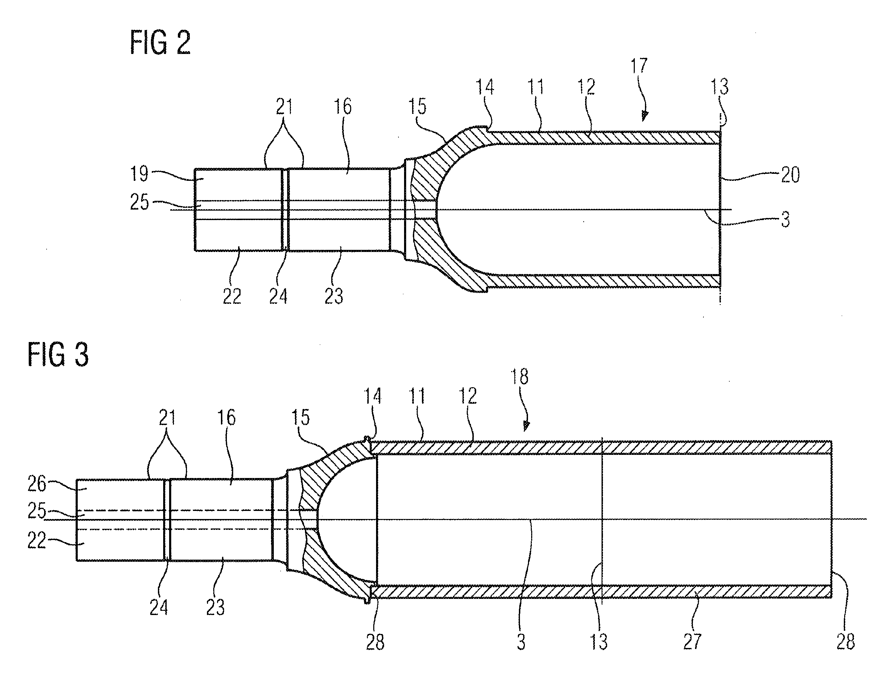

Außerdem können die Achsstummel 16 bei Bedarf und wie beispielsweise in FIG 2 oder 3 ersichtlich eine zentrale Längsbohrung aufweisen. Deren Innendurchmesser ist allerdings deutlich kleiner als der des zylindrischen Innenhohlraums des Läuferbereichs 12. Sie dient zur anfänglich und auch während zyklischer Wartungen durchgeführten Ultraschallprüfung der der Radsatzwelle 4 auf Risse. In diese Längsbohrung wird der Ultraschallmesskopf eingeführt. Der Außenumfang der Achsstummel 16 ist zumindest während der Wartungen wegen der montierten Räder und/oder Lager nicht zugänglich.

Der Außendurchmesser der Achsstummel 16 ist kleiner als der des Läuferbereichs 12. Dadurch ergibt sich eine Material- und Gewichtseinsparung. Außerdem ist die Wandstärke im Läuferbereich 12 vorzugsweise so bemessen, dass ein Innendurchmesser der Hohlwelle im Läuferbereich 12 größer ist als der Außendurchmesser der Achsstummel 16. Der Läuferbereich 12, insbesondere dessen Außendurchmesser, ist nach den Erfordernissen des Blechpakets 8 des Läufers 5 dimensioniert. Für die Auslegung der Achsstummel 16 und auch hier vor allem deren Außendurchmesser sind die Biegefestigkeit, ein ausreichender Presssitz für das Rad sowie ein ausreichender Außendurchmesser für das Radlager maßgebliche Kriterien.

Im zentralen Läuferbereich 12 kann die durch den zylindrischen Innenhohlraum bedingte Materialeinsparung vorgesehen werden, ohne dass dadurch Einbußen in der mechanischen Stabilität resultieren. Aufgrund des größeren Außendurchmessers im Läuferbereich 12 können hier die durch Torsions- und Biegemomente hervorgerufenen mechanischen Spannungen geringer eingestellt werden als in den Achsstummeln 16, die einen kleineren Außendurchmesser haben. Insgesamt hat die Radsatzwelle 4 aufgrund des Innenhohlraums im Läuferbereich 12 ein vergleichsweise geringes Gewicht bei trotzdem hoher mechanischer Stabilität.

In FIG 2 und 3 sind zwei konkrete Realisierungsformen der Radsatzwelle 4 gemäß FIG 1 dargestellt. Gezeigt sind in jeweils teilmontiertem Zustand Ausführungsbeispiele einer Radsatzwelle 17 bzw. 18.

Die Radsatzwelle 17 gemäß FIG 2 ist zweiteilig ausgeführt, wobei in FIG 2 nur ein Wellenteil 19 gezeigt ist. Das zweite nicht dargestellte Wellenteil ist bauchgleich zum Wellenteil 19 und mit diesem an einer zentralen Verbindungsstelle 20 in der axialen Mitte 13 mittels einer Reibschweißtechnik fest verbunden. Die beiden Wellenteile sind spiegelsymmetrisch zur Mitte 13 angeordnet. Das Wellenteil 19 und das nicht gezeigte zweite Wellenteil sind aus einem hochwertigen Vergütungsstahl geschmiedet.

Das Wellenteil 19 umfasst einen der Achsstummel 16, eine der Übergangszonen 15 und die Hälfte des Läuferbereichs 12. Der Achsstummel 16 hat eine Außenumfangsfläche 21 mit zwei Teilzonen, nämlich einer zur Montage eines Rads bestimmten Radzone 22 und einer zur Montage eines Lagers bestimmten Lagerzone 23, die durch eine umlaufende Nut 24 voneinander getrennt sind. Die Radsatzwelle 17 ist innengelagert, d.h. die Radzone 22 und nicht die Lagerzone 23 befindet sich am äußeren axialen Rand. Außerdem weist das Wellenteil 19 eine bereits angesprochene durchgehende zentrale Bohrung 25 im Bereich des Achsstummels 16 und der Überganszone 15 auf.

Die Radsatzwelle 18 gemäß FIG 3 ist dreiteilig ausgeführt. Sie umfasst zwei Wellenrandteile 26, von denen in FIG 3 nur eines dargestellt ist, und ein dazwischen angeordnetes Wellenmittenteil 27. Das dargestellte linke Wellenrandteil 26 ist an einer Verbindungsstelle 28 fest mit dem Wellenmittenteil 27 verschweißt. Analog ist am anderen axialen Ende des Wellenmittenteils 27 eine weitere Verbindungsstelle 28 zu dem nicht gezeigten rechten Wellenrandteil 26 vorgesehen.

Jedes Wellenrandteil 26 enthält einen der Achsstummel 16 und eine der Übergangszonen 15. Das Wellenmittenteil 27 enthält dagegen den Läuferbereich 12. Es ist als Rohrstück ausgeführt und besteht aus einem anderen Material als die beiden Wellenrandteile 26, die wieder aus einem hochwertigen Vergütungsstahl geschmiedet sind. Die geringere mechanische Beanspruchung und die speziell im Läuferbereich 12 aufgrund der unmittelbar benachbarten Anordnung des magnetisch aktiven Läufers 5 herrschenden magnetischen Flussverhältnisse bedingen die unterschiedliche Materialwahl, die der dreiteilige Aufbau der Radsatzwelle 18 vorteilhafterweise ermöglicht. Insbesondere besteht das Wellenmittenteil 27 aus einem Baustahl. Im Ausführungsbeispiel ist der Baustahl St37 vorgesehen. Es kann auf ein aus diesem Material vorgefertigtes Rohrstück zurückgegriffen werden, wodurch sich der Herstellungsaufwand senken lässt.

Grundsätzlich kann der Läuferbereich, aber auch als eine Vollwelle oder ein Vollwellen-Teilstück ausgebildet sein. Auch bei dieser nicht gezeigten alternativen Ausführungsform ist der Läufer 5, also insbesondere das Blechpaket 8 des Läufers 5, direkt auf die Außenumfangsfläche dieser Vollwelle oder dieses Vollwellen-Teilstücks montiert.

Unter einer Vollwelle oder einem Vollwellen-Teilstück wird dabei ein massives Teil verstanden, das einstückig ist, also beispielsweise durch spanabhebende Bearbeitung aus einem Block gefertigt wird.

Unter einer Vollwelle oder einem Vollwellen-Teilstück wird aber auch ein massives Teil verstanden, das vergleichsweise geringe Ausnehmungen oder Bohrungen mit geringem Durchmesser aufweist, die z.B. für Wartungszwecke insbesondere Ultraschalluntersuchungen an Radsatzen vorgesehen sind. Sie weisen dabei vergleichbare technische Eckdaten (Torsionsmoment, Festigkeit etc.) wie die oben erwähnten Vollwellen oder Vollwellen-Teilstücke auf.

Wellen werden allgemein, insbesondere Achswellen von Radsätzen für Schienenfahrzeuge auf Biegung durch radiale Kräfte aus den Trag-, Führungs-, Antriebs- und Bremsaufgaben beansprucht. Des Weiteren werden derartige Wellen auf Torsion durch Drehmomente aus dem Antriebs-, Brems- und Führungsaufgaben beansprucht. Die Forderung nach geringeren Massen bei höheren Beanspruchungen erfordern genaueste Berechnung und sorgfältige Gestaltung dieser Wellen unter Beachtung der Dauerfestigkeit.

Für erfindungsgemäße Wellen bei Schienenfahrzeugen werden folgende Belastungswerte zugrunde gelegt:
- Anfahrt mit maximaler Antriebskraft, wobei die dynamischen Trag- und Führungskräfte klein sind,
- Fahrt mit Höchstgeschwindigkeit und den dabei maximal möglichen Antriebs- bzw. Bremskräften, wobei die dynamischen Trag- und Führungskräfte groß, die Antriebskräfte klein sind,
- Fahrt im Gleisbogen mit Fliehkraftüberschuss, wobei die statischen Führungskräfte groß sind.

Bei der Ausgestaltung der Welle als Radsatzwelle 4, 18 muss, die Biegewechselfestigkeit, die Größen und Oberflächeneinflüsse, Einfluss der Kerbwirkungen aus Durchmesserunterschieden Ausrundungsradien und Mulden, die Kerbwirkung aus Vorspannungen und Kantenpressungen, die von den Schrumpf- und Presssitzverbindungen herrühren, die Kerbempfindlichkeit der Stahlsorte, als auch die Zuschläge für den Verschleiß und eventuelle Nacharbeiten berücksichtigt werden.

Die Masse einer Hohlwelle sinkt gegenüber einer Vollwelle bei gleich bleibendem Außendurchmesser durch Anwendung innerer Bohrungen schneller als das Widerstandsmoment. Vorteile der Hohlwellen sind die geringere Masse und daraus herrührend die geringeren dynamischen Kräfte zwischen Rad und Schiene sowie die Energieeinsparungen (insbesondere im Nahverkehr) und die Möglichkeit z.B. von Ultraschallprüfungen vom Bohrungsinneren aus, auch unter den sehr bruchgefährdeten Nabensitzen.

Vorteile der Vollwellen oder Vollwellen-Teilstücke sind die geringere Durchbiegung, die bessere Wärmeableitung und die damit geringeren Lagetemperaturen. Des Weiteren sind Vollwellen einfacher und preiswerter herzustellen. Vorteilhaft sind des Weiteren die vergleichsweise geringeren Lagerdurchmesser.

## Patentansprüche

1. Radsatzwelle für eine achsreitende elektrische Antriebsmaschine (2) umfassend zwei axial seitliche Randbereiche (15, 16) und einen zwischen den Randbereichen (15,16) angeordneten Mittenbereich (12), wobei
a) jeder Randbereich (15, 16) zumindest teilweise als Vollzylinder mit einer ersten Außenumfangsfläche (21) zur Montage eines Rades oder eines Lagers ausgebildet ist, wobei der Vollzylinder gegebenenfalls eine zur vorgesehene Ultraschalluntersuchung zentrale Längsbohrung (25) aufweisen kann,
b) der Mittenbereich (12) als leerer Hohlzylinder mit einer zweiten Außenumfangsfläche (11) zur direkten Montage eines Läufers (5) der achsreitenden elektrischen Antriebsmaschine (2) ausgebildet ist, und
c) ein zweiteiliger Aufbau mit zwei Wellenteilen (19) vorgesehen ist, wobei jedes Wellenteil (19) jeweils einen der Randbereiche (15,16) und einen Teil des hohlen Mittenbereichs (12) umfasst und die Wellenteile (19) an jeweils dem Mittenbereich (12) zugewandten axialen Enden fest miteinander verbunden sind.

2. Radsatzwelle nach Anspruch 1, **dadurch gekennzeichnet, dass** der Mittenbereich (12) einen größeren Außendurchmesser hat als die beiden Randbereiche (16).

3. Radsatzwelle nach Anspruch 1, **dadurch gekennzeichnet, dass** die beiden Wellenteile (19) gleich aufgebaut sind und eine Verbindungsstelle (20) der Wellenteile (19) in der axialen Mitte (13) des Mittenbereichs (12) liegt.

4. Radsatzwelle nach Anspruch 1, **dadurch gekennzeichnet, dass** am Außenumfang mindestens ein radialer Vorsprung (14) vorgesehen ist.

5. Radsatzwelle für eine achsreitende elektrische Antriebsmaschine (2) umfassend zwei axial seitliche Randbereiche (15, 16) und einen zwischen den Randbereichen (15,16) angeordneten Mittenbereich (12), wobei
a) jeder Randbereich (15,16) zumindest teilweise als Vollzylinder mit einer ersten Außenumfangsfläche (21) zur Montage eines Rades oder eines Lagers ausgebildet ist, wobei der Vollzylinder gegebenenfalls eine zur Ultraschalluntersuchung vorgesehene zentrale Längsbohrung (25) aufweisen kann,
b) der Mittenbereich (12) als leerer Hohlzylinder mit einer zweiten Außenumfangsfläche (11) zur direkten Montage eines Läufers (5) der achsreitenden elektrischen Antriebsmaschine (2) ausgebildet ist, und
c) ein dreiteiliger Aufbau mit zwei jeweils einen der Randbereiche (15,16) umfassenden Wellenrandteilen (26) und mit einem den Mittenbereich (12) bildenden Wellenmittenteil (27) vorgesehen ist, wobei der Wellenmittenteil (27) an seinen beiden axialen Enden mit jeweils einem der Wellenrandteile (26) fest verbunden ist.

6. Radsatzwelle nach Anspruch 5, **dadurch gekennzeichnet, dass** der Mittenbereich (12) einen größeren Außendurchmesser hat als die beiden Randbereiche (16).

7. Radsatzwelle nach Anspruch 5, **dadurch gekennzeichnet, dass** das Wellenmittenteil (27) aus einem anderen Material besteht als die Wellenrandteile (26).

8. Radsatzwelle nach Anspruch 5, **dadurch gekennzeichnet, dass** das Wellenmittenteil (27) aus einem Material mit magnetischen Verhalten besteht.

9. Radsatzwelle nach Anspruch 5, **dadurch gekennzeichnet, dass** das Wellenmittenteil (27) aus einem vorgefertigten Rohrstück besteht.

10. Radsatzwelle nach Anspruch 5, **dadurch gekennzeichnet, dass** am Außenumfang mindestens ein radialer Vorsprung (14) vorgesehen ist.

11. Antriebseinheit mit einer Radsatzwelle nach einem der vorhergehenden Ansprüche, **dadurch gekennzeichnet, dass** ein Läufer (5) einer achsreitenden elektrischen Antriebsmaschine (2) direkt auf die zweite Außenumfangsfläche (11) des hohlen Mittenbereichs (12) der Radsatzwelle (4;17; 18) montiert ist.

## Claims

1. Wheel set shaft for an axle-mounted electrical drive machine (2) comprising two axially lateral edge regions (15, 16) and a central region (12) which is arranged between the edge regions (15, 16), with
a) each edge region (15, 16) at least partially being in the form of a solid cylinder with a first outer circumferential surface (21) for mounting a wheel or a bearing, it being possible for the solid cylinder to have a central longitudinal hole (25) which is provided for ultrasound investigation,
b) the central region (12) being in the form of an empty hollow cylinder with a second outer circumferential surface (11) for directly mounting a rotor (5) of the axle-mounted electrical drive machine (2), and
c) a two-part structure with two shaft parts (19) being provided, with each shaft part (19) in each case comprising one of the edge regions (15, 16) and a part of the hollow central region (12), and the shaft parts (19) being firmly connected to one another at axial ends which in each case face the central region (12).

2. Wheel set shaft according to Claim 1, **characterized in that** the central region (12) has a larger outside diameter than the two edge regions (16).

3. Wheel set shaft according to Claim 1, **characterized in that** the two shaft parts (19) are of identical construction and a connecting point (20) of the shaft parts (19) is situated in the axial centre (13) of the central region (12).

4. Wheel set shaft according to Claim 1, **characterized in that** at least one radial projection (14) is provided on the outer circumference.

5. Wheel set shaft for an axle-mounted electrical drive machine (2) comprising two axially lateral edge regions (15, 16) and a central region (12) which is arranged between the edge regions (15, 16), with
a) each edge region (15, 16) at least partially being in the form of a solid cylinder with a first outer circumferential surface (21) for mounting a wheel or a bearing, it being possible for the solid cylinder to have a central longitudinal hole (25) which is provided for ultrasound investigation,
b) the central region (12) being in the form of an empty hollow cylinder with a second outer circumferential surface (11) for directly mounting a rotor (5) of the axle-mounted electrical drive machine (2), and
c) a three-part structure with two shaft edge parts (26), which in each case comprise one of the edge regions (15, 16), and with a shaft central part (27), which forms the central region (12), being provided, with the shaft central part (27) being firmly connected to in each case one of the shaft edge parts (26) at its two axial ends.

6. Wheel set shaft according to Claim 5, **characterized in that** the central region (12) has a larger outside diameter than the two edge regions (16).

7. Wheel set shaft according to Claim 5, **characterized in that** the shaft central part (27) is composed of a material which differs from that of the shaft edge parts (26).

8. Wheel set shaft according to Claim 5, **characterized in that** the shaft central part (27) is composed of a material which exhibits magnetic behaviour.

9. Wheel set shaft according to Claim 5, **characterized in that** the shaft central part (27) consists of a prefabricated tubular piece.

10. Wheel set shaft according to Claim 5, **characterized in that** at least one radial projection (14) is provided on the outer circumference.

11. Drive unit having a wheel set shaft according to one of the preceding claims, **characterized in that** a rotor (5) of an axle-mounted electrical drive machine (2) is mounted directly on the second outer circumferential surface (11) of the hollow central region (12) of the wheel set shaft (4; 17; 18).

## Revendications

1. Arbre d'essieu pour une machine ( 2 ) motrice électrique chevauchant un essieu, comprenant deux zones ( 15, 16 ) de bord latérales axialement et une partie ( 12 ) médiane disposée entre les deux zones ( 15, 16 ) de bord, dans lequel
a) chaque zone ( 15, 16 ) de bord est constitué sous la forme d'un cylindre plein ayant une surface ( 21 ) périphérique extérieure pour le montage d'une roue ou d'un palier, dans lequel le cylindre plein peut comporter le cas échéant une boutonnière ( 25 ) centrale prévue pour l'analyse par ultrasons,
b) la partie ( 12 ) médiane est constituée sous la forme d'un cylindre creux vide ayant une deuxième surface ( 11 ) périphérique extérieure pour le montage direct d'un rotor ( 5 ) de la machine ( 2 ) motrice électrique chevauchant un essieu, et
c) il est prévu une structure en deux parties ayant deux parties ( 19 ) d'arbre, chaque partie ( 19 ) d'arbre comprenant respectivement l'une des zones ( 15, 16 ) de bord et une partie de la zone ( 12 ) médiane creuse et les parties ( 19 ) d'arbre sont reliées rigidement l'une à l'autre aux extrémités axiales respectives tournées vers la zone ( 12 ) médiane.

2. Arbre d'essieu suivant la revendication 1, **caractérisé en ce que** la zone ( 12 ) médiane a un diamètre extérieur plus grand que les deux zones ( 16 ) de bord.

3. Arbre d'essieu suivant la revendication 1, **caractérisé en ce que** les deux parties ( 19 ) d'arbre sont constituées de manière identique et un point ( 20 ) de liaision des parties ( 19 ) d'arbre se trouve dans le milieu ( 13 ) axial de la zone ( 12 ) médiane.

4. Arbre d'essieu suivant la revendication 1, **caractérisé en ce qu'**au moins une saillie ( 14 ) radiale est prévue sur le pourtour extérieur.

5. Arbre d'essieu pour une machine ( 2 ) motrice électrique chevauchant un essieu, comprenant deux zones ( 15, 16 ) de bord latérales axialement et une partie ( 12 ) médiane disposée entre les deux zones ( 15, 16 ) de bord, dans lequel
a) chaque zone ( 15, 16 ) de bord est constitué sous la forme d'un cylindre plein ayant une surface ( 21 ) périphérique extérieure pour le montage d'une roue ou d'un palier, dans lequel le cylindre plein peut comporter le cas échéant une boutonnière ( 25 ) centrale prévue pour l'analyse par ultrasons,
b) la partie ( 12 ) médiane est constituée sous la forme d'un cylindre creux vide ayant une deuxième surface ( 11 ) périphérique extérieure pour le montage direct d'un rotor ( 5 ) de la machine ( 2 ) motrice électrique chevauchant un essieu, et
c) il est prévu une structure en trois parties ayant deux parties ( 26 ) de bord d'arbre comprenant respectivement l'une des zones ( 15, 16 ) de bord et une partie ( 27 ) médiane d'arbre formant la zone ( 12 ) médiane, la partie ( 27 ) médiane d'arbre étant reliée fixement par ses deux extrémités axiales à respectivement l'une des parties ( 26 ) de bord d'arbre.

6. Arbre d'essieu suivant la revendication 5, **caractérisé en ce que** la zone ( 12 ) médiane a un diamètre extérieur plus grand que les deux zones ( 16 ) de bord.

7. Arbre d'essieu suivant la revendication 5, **caractérisé en ce que** la partie ( 27 ) médiane d'arbre est en un matériau autre que les parties ( 26 ) de bord d'arbre.

8. Arbre d'essieu suivant la revendication 5, **caractérisé en ce que** la partie ( 27 ) médiane d'arbre est en un matériau ayant un comportement magnétique.

9. Arbre d'essieu suivant la revendication 5, **caractérisé en ce que** la partie ( 27 ) médiane d'arbre est en une pièce tubulaire préfabriquée.

10. Arbre d'essieu suivant la revendication 5, **caractérisé en ce qu'**au moins une saillie ( 14 ) radiale est prévue sur le pourtour extérieur.

11. Groupe d'entraînement ayant un arbre d'essieu suivant l'une des revendications précédentes, **caractérisé en ce qu'**un rotor ( 5 ) d'une machine ( 2 ) motrice électrique chevauchant l'essieu est monté directement sur la deuxième surface ( 11 ) périphérique extérieure de la zone ( 12 ) médiane creuse de l'arbre ( 4 ; 17 ; 18 ) d'essieu.
